# EUROPÄISCHE PATENTSCHRIFT

(11) **EP 0 545 019 B1**
(45) Veröffentlichungstag und Bekanntmachung des Hinweises auf die Patenterteilung: **14.02.1996**
(21) Anmeldenummer: 92116807.6
(22) Anmeldetag: 01.10.1992
(51) Int. Cl.: B60P 7/13

(54) **Vorrichtung zur Verriegelung eines Containers an einem Fahrzeugchassis**
Device for latching a container on a vehicle frame
Dispositif de verrouillage d'un conteneur sur le châssis d'un véhicule

(30) Priorität: 30.11.1991 DE 9114903 U
(43) Veröffentlichungstag der Anmeldung: 09.06.1993
(73) Patentinhaber: Schulz, Gerd, D-34289 Zierenberg (DE)
(72) Erfinder: Schulz, Gerd, D-34289 Zierenberg (DE)
(74) Vertreter: Eisenführ, Speiser & Partner

(56) Entgegenhaltungen:
- EP-A- 0 051 107
- DE-U- 8 910 645
- GB-A- 1 298 035
- US-A- 3 621 236

## Beschreibung

Die Erfindung betrifft eine Vorrichtung zur Verriegelung eines Containers an einem Fahrzeugchassis, mit einem an einem Teil des Fahrzeugchassis gelagerten und in axialer Richtung zwischen einer eingefahrenen und einer ausgefahrenen Stellung bewegbaren Steckzapfen, der in seiner ausgefahrenen Stellung in einen Verriegelungsbeschlag eines am Fahrzeugchassisteil in Anlage gebrachten Containers eingreift.

Eine solche Vorrichtung entsprechend den Merkmalen des Oberbegriffs des unabhängigen Anspruchs 1 ist aus EP-A-0 051 107 bekannt und wird insbesondere an den beiden Enden der vordersten Quertraverse eines Sattelaufliegers für Container vorgesehen. Dabei dient diese Traverse nicht zur Auflage, sondern lediglich zur Anlage eines auf dem Sattelauflieger liegenden Containers. Der Container wird zum Transport auf den Sattellieger aufgelegt und soweit in Fahrtrichtung auf dem Sattelauflieger verschoben, bis der Container in Anlage an die vorderste Quertraverse gelangt. Dann werden die Steckzapfen an den Enden der vordersten Quertraverse ausgefahren, damit diese in die entsprechenden Verriegelungsbeschläge des Containers eingreifen können, wozu der Container allerdings entsprechend ausgerichtet sein muß.

Es hat sich jedoch herausgestellt, daß der Herstellungsaufwand für die Lagerung und Führung der herkömmlichen Steckzapfen besonders hoch ist. Dies liegt an einer im allgemeinen recht komplizierten Ausbildung der Lagerung und Führung des Steckzapfens am zugehörigen Fahrzeugchassisteil.

Es ist daher Aufgabe der Erfindung, die Lagerung und Führung eines solchen Steckzapfens einer Vorrichtung der eingangs genannten Art zu vereinfachen.

Diese Aufgabe wird dadurch gelöst, daß der Steckzapfen der Vorrichtung der eingangs genannten Art an einem ersten Führungselement sitzt, das eine längliche und sich in axialer Richtung des Steckzapfens erstreckende Ausnehmung aufweist, in oder durch die ein am Fahrzeugchassisteil vorgesehenes und gegenüber der Bewegung des Steckzapfens feststehendes zweites Führungselement ragt.

Die erfindungsgemäße Lagerung und Führung des Steckzapfens wird mit Hilfe des den Steckzapfen tragenden ersten Führungselementes in Zusammenwirkung mit dem feststehenden zweiten Führungselement erreicht. Dabei ragt das zweite Führungselement in oder durch eine am ersten Führungselement vorgesehene Ausnehmung. Dadurch, daß diese Ausnehmung in länglicher Form ausgebildet ist und sich in axialer Richtung des Steckzapfens erstreckt, bleibt die axiale Bewegbarkeit des Steckzapfens aufrechterhalten, während eine Bewegung des ersten Führungselementes quer zur Achse des Steckzapfens durch das feststehende und in oder durch die Ausnehmung des ersten Führungselementes ragende zweite Führungselement verhindert wird.

Mit Hilfe der Erfindung wird also eine einfache, jedoch zugleich sichere Lagerung und Führung des Steckzapfens geschaffen. Durch die Einfachheit der erfindungsgemäßen Anordnung können die Herstellungskosten in nicht unerheblicher Weise gesenkt werden. Als weiterer Vorteil ist die platzsparende Bauform der erfindungsgemäßen Anordnung zu nennen. Außerdem läßt sich die erfindungsgemäße Vorrichtung besonders einfach an der Außenseite eines Fahrzeugchassisteils anbringen, was insbesondere bei einer Nachrüstung eines Fahrzeugchassis mit der erfindungsgemäßen Vorrichtung von Vorteil ist.

Vorzugsweise sind der Steckzapfen und das zweite Führungselement in einem separaten, am Fahrzeugchassisteil befestigbaren Gehäuse gelagert. Bei einer derartigen Konstruktion braucht das Fahrzeugchassisteil im wesentlichen nicht besonders angepaßt oder verändert zu werden; lediglich das Gehäuse muß an diesem befestigt werden.

Gemäß einer bevorzugten Weiterbildung dieser Ausführung ist das zweite Führungselement von einem an mindestens einer Gehäusewand befestigten Bolzen gebildet.

Es gibt aber auch Anwendungsfälle, bei denen der Container nicht in Anlage an das entsprechende Fahrzeugchassisteil gebracht werden kann, sondern auf diesen aufgelegt werden muß, beispielsweise weil dieser Container eine andere Länge oder Form besitzt, die eine andere Anordnung auf dem Fahrzeugchassis nicht erlauben. Für diese Fälle muß dann ein zusätzlicher Twist-Lock vorgesehen werden. In der Vergangenheit hat sich jedoch gezeigt, daß der Einbau eines Twist-Locks im Fahrzeugchassisteil im Bereich des axial bewegbaren Steckzapfens Probleme insofern bereitet, als der Twist-Lock und der Steckzapfen sich in Anordnung und Funktion nicht gegenseitig behindern. Dies führte zu komplizierten Anordnungen, die einen hohen Herstellungsaufwand und somit hohe Kosten verursachten.

Gemäß einem weiteren wichtigen Aspekt dieser Erfindung wurde zur Lösung dieses Problemes gefunden, daß das zweite Führungselement vom Spannbolzen eines am Fahrzeugchassisteil angeordneten Twist-Locks gebildet werden kann, der in Eingriff mit einem Verriegelungsbeschlag eines auf das Fahrzeugchassisteil aufliegenden Containers bringbar ist. Bei dieser Ausführung werden also der Twist-Lock und der Steckzapfen in ihrer Anordnung erfindungsgemäß so kombiniert, daß der Spannbolzen des Twist-Locks durch die Ausnehmung im ersten Führungselement, an dem der Steckzapfen sitzt, geführt ist. Mit Hilfe der Erfindung wird also in besonders geschickter Weise eine Anordnung von Steckzapfen und Twist-Lock geschaffen, welche nicht nur eine besonders einfache Konstruktion ermöglicht, sondern auch nur einen geringen Platzbedarf und somit kleine Bauform erfordert, ohne daß die Funktionen von Steckzapfen und Twist-Lock gegenseitig beeinflußt werden.

Vorzugsweise erstreckt sich das zweite Führungselement rechtwinklig zum Steckzapfen, wodurch eine besonders gute Führung und axiale Bewegbarkeit des Steckzapfens erzielt wird. Zweckmäßigerweise schneidet die Mittelachse des zweiten Führungselementes die Mittelachse des Steckzapfens, wodurch nicht nur die Bauform der gesamten Anordnung besonders klein gehalten werden kann, sondern auch die Ausrichtung des Containers erleichtert wird, wenn das zweite Führungselement vom Spannbolzen eines Twist-Locks gebildet wird.

Eine Weiterbildung der erfindungsgemäßen Vorrichtung mit integriertem zusätzlichem Twist-Lock zeichnet sich dadurch aus, daß der Steckzapfen horizontal angeordnet ist und in seiner ausgefahrenen Stellung in einen Verriegelungsbeschlag eines seitlich am Fahrzeugchassisteil anliegenden Containers eingreift und daß sich der Spannbolzen des Twist-Locks in vertikaler Richtung erstreckt und dessen Verriegelungskopf am oberen Ende des Spannbolzens und vorzugsweise auf der Oberseite des Fahrzeugchassisteils angeordnet ist, wodurch der Twist-Lock in Eingriff mit einem Verriegelungsbeschlag eines auf der Oberseite des Fahrzeugchassisteils aufliegenden Containers bringbar ist.

Bei einer gegenwärtig besonders bevorzugten Ausführung besteht die Ausnehmung im ersten Führungselement, an dem der Steckzapfen sitzt, aus einem Langloch oder Schlitz. Alternativ kann das Führungselement beispielsweise aber auch die Form einer Gabel mit zwei im Abstand voneinander angeordneten Schenkeln besitzen, zwischen denen die Ausnehmung gebildet ist.

Der Steckzapfen kann mittels eines Schwenkhebels bewegt werden. Vorzugsweise kann der Schwenkhebel entweder am Fahrzeugchaussisteil oder am Gehäuse gelagert sein. Hierzu kann vorzugsweise am ersten Führungselement ein Stift angebracht sein, der lose in eine an einem Ende des Schwenkhebels vorgesehene Aussparung ragt.

Gewöhnlich erstreckt sich der Steckzapfen in Längsrichtung des Fahrzeugchassis, so daß dieser in eine seitliche Öffnung eines Verriegelungsbeschlages eines am Fahrzeugchassisteil in Anlage gebrachten Containers eingreift.

Eine weitere gegenwärtig besonders bevorzugte Ausführung der Erfindung zeichnet sich dadurch aus, daß das Fahrzeugchassis ein Container-Chassis in Gooseneck-Ausführung ist und an dessen vorderster Quertraverse mindestens ein sich entgegen der Fahrtrichtung erstreckender Steckzapfen gelagert ist.

Solche Container-Chassis werden in einer Ausführung verwendet, die in einen kürzeren vorderen Längsabschnitt und einen längeren hinteren Längsabschnitt unterteilt ist. Der längere hintere Abschnitt ist tiefergelegt, um Container mit größerer Höhe verwenden zu können, da die Höhe der Container und sonstige Aufbauten durch die maximal zulässige Durchfahrthöhe unter Brücken, Unterführungen etc. begrenzt ist. Der längere hintere Abschnitt des Container-Chassis ist derart tiefergelegt, daß der kürzere vordere Abschnitt, auch Gooseneck-Teil genannt, oberhalb der Auflageebene des längeren hinteren Abschnittes angeordnet ist, da der Königzapfen auf einer bestimmten definierten Höhe liegen muß, um in die Kupplung des Sattelschleppers passen zu können, und somit der kürzere vordere Abschnitt nicht tiefergelegt werden kann. Zwischen vorderem und hinterem Abschnitt des Container-Chassis wird demnach ein Absatz gebildet. Damit ein Container mit einer Länge, die der Gesamtlänge des Container-Chassis entspricht, gleichwohl sicher auf diesem aufgelegt und befestigt werden kann, muß die Wandung im vorderen Bereich der Unterseite des Containers mit einem nach innen ragenden, zurückgenommenen Abschnitt, auch Gooseneck-Tunnel genannt, zur Bildung einer zurückspringenden Ausnehmung für die Aufnahme des vorderen Abschnittes versehen sein. Am vordersten Ende des kürzeren vorderen Abschnittes des Container-Chassis sitzt eine Quertraverse, auf der der Container aufgrund der zuvor beschriebenen Konstruktion nicht aufliegt, sondern an deren Rückseite sich der Container mit dem unteren Abschnitt seiner Vorderseite in Anlage befindet, wobei die an den Enden der vordersten Quertraverse gelagerten Steckzapfen in ihrer ausgefahrenen Stellung in seitliche Öffnungen der zugewandten Verriegelungsbeschläge des Containers eingreifen.

Es gibt aber nun auch Fälle, in denen auf dem Containerchassis der zuvor beschriebenen Gooseneck-Ausführung Container transportiert werden sollen, welche einen Gooseneck-Tunnel nicht aufweisen. Diese Container müssen dann zwangsläufig mit ihrer ebenen Unterseite auf der Oberseite des vorderen Abschnittes aufliegen, was jedoch zur Folge hat, daß die Steckzapfen an der vordersten Quertraverse nicht zur Befestigung solcher Container verwendet werden können, da die entsprechenden Verriegelungsbeschläge dieser Container oberhalb der Steckzapfen liegen. In solchen Fällen wird der Container ein wenig, im allgemeinen entsprechend der Breite der vordersten Quertraverse, nach vorne verschoben, so daß der Container nun auf der vordersten Quertraverse aufliegt. Nun kann der Container an seiner Vorderseite mit Hilfe der Twist-Locks fixiert werden, die in der erfindungsgemäßen Anordnung gemeinsam mit den Steckzapfen an den beiden Enden der vordersten Quertraverse vorgesehen sind und dessen Spannbolzen durch die Ausnehmungen der die Steckzapfen tragenden ersten Führungselemente gesteckt sind. Mit Hilfe der erfindungsgemäßen Anordnung kann somit ein Container-Chassis in Gooseneck-Ausführung sowohl für den Transport von Containern mit Gooseneck-Tunnel als auch für den Transport von herkömmlichen Containern ohne Gooseneck-Tunnel und somit wesentlich vielseitiger als die herkömmlichen Container-Chassis dieser Art verwendet werden.

In diesem Zusammenhang ist eine weitere gegenwärtig besonders bevorzugte Ausführung der Erfindung vorgesehen, welche mindestens einen zusätzlichen Twist-Lock aufweist, der an einer zusätzlichen Quertraverse angebracht ist, die in einem der Länge eines Containers entsprechenden Abstand zur vordersten Quertraverse angeordnet ist, und welche dadurch gekennzeichnet ist, daß der zusätzliche Twist-Lock an einem Tragelement installiert ist, das zwischen einer Arbeitsstellung, in der der Twist-Lock mit einem Verriegelungsbeschlag eines auf dem Fahrzeugchassis aufliegenden Containers in Eingriff bringbar ist, und einer Ruhestellung, in der sich der Twist-Lock außer Eingriff mit dem Verriegelungsbeschlag des Containers und in einem Abstand zum Container befindet, bewegbar am Fahrzeugchassis gehaltert ist.

Diese Ausführung hat insbesondere den Vorteil, daß ein auf einem Container-Chassis in Gooseneck-Ausführung aufgesetzter herkömmlicher Container ohne Gooseneck-Tunnel auch an seiner Hinterseite sicher befestigt werden kann. In diesem Fall werden nämlich die zusätzlichen Twist-Locks in ihre Arbeitsstellung bewegt, in der sie mit den entsprechenden Verriegelungsbeschlägen dieses Containers in Eingriff bringbar sind. Wenn dagegen Container und insbesondere Container mit Gooseneck-Tunnel transportiert werden sollen, welche dann an ihrer Vorderseite mit Hilfe der ausgefahrenen Steckzapfen arretiert werden, kann es vorkommen, daß die zusätzlichen Twist-Locks stören, wenn eine Ausrichtung zu Verriegelungsbeschlägen des Containers aufgrund ihrer Lage nicht möglich ist. In solchen Fällen können diese zusätzlichen Twist-Locks bei dieser erfindungsgemäßen Ausführung in eine Ruhestellung bewegt werden, in der sie die Auflage des Containers auf dem Fahrzeugchassis nicht behindern. Dabei sollte sich das Twist-Lock-Tragelement in der Ruhestellung vollständig unter der auf dem Fahrzeugchassis gebildeten Auflageebene des Containers befinden.

Vorzugsweise ist das Twist-Lock-Tragelement zwischen der Arbeits- und der Ruhestellung schwenkbar am Fahrzeugchassis gehaltert. Bei einer gegenwärtig besonders bevorzugten Weiterbildung dieser Ausführung verläuft die Schwenkachse in Richtung der Längserstreckung des Fahrzeugchassis und ist somit das Twist-Lock-Tragelement quer zur Längserstreckung des Fahrzeugchassis verschwenkbar. Dadurch ist das Twist-Lock-Tragelement auch quer zur Fahrtrichtung des Fahrzeugchassis verschwenkbar, so daß ein unbeabsichtigtes Verschwenken des Twist-Lock-Gehäuses durch in Fahrtrichtung auftretende Brems- und Beschleunigungskräfte im wesentlichen nicht möglich ist. Zweckmäßigerweise sollte das Twist-Lock-Tragelement zur Mitte des Fahrzeugchassis hin verschwenkbar sein.

Bei einer weiteren Ausführung der Erfindung verläuft die Drehachse des Spannbolzens des Twist-Locks in einem Abstand zur Schwenkachse des Twist-Lock-Tragelementes, wobei der Verriegelungskopf des Twist-Locks in einem Abstand zur Schwenkachse des Twist-Locks-Tragelementes angeordnet und von der Schwenkachse im wesentlichen weggerichtet ist. Zur Arretierung des Twist-Lock-Tragelementes in der Arbeitsstellung sollte vorzugsweise am Fahrzeugchassis ein erster Anschlag befestigt sein, auf dem das Twist-Lock-Tragelement in der Arbeitsstellung aufliegt. Dieser Anschlag kann eine rechtwinklig zur Schwenkebene und winklig zur Schwenkrichtung des Twist-Lock-Tragelementes angeordnete Auflagefläche aufweisen, auf der das Twist-Lock-Tragelement mit einer entsprechend ausgebildeten Fläche in der Arbeitsstellung aufliegt. Mit dieser Ausführung wird eine konstruktiv besonders einfache Anordnung geschaffen, mit der das Twist-Lock-Tragelement sicher in der Arbeitsstellung gehalten wird und eine definierte Lage einnimmt.

Damit auch das Twist-Lock-Tragelement in der Ruhestellung eine definierte Lage einnehmen kann, sollte am Fahrzeugchassis ebenfalls ein zweiter Anschlag befestigt sein, an den das Twist-Lock-Tragelement in der Ruhestellung anstößt. Der Schwenkwinkel sollte zweckmäßigerweise auf maximal 180° begrenzt sein.

Im allgemeinen steht in der Arbeitsstellung der Spannbolzen des Twist-Locks im wesentlichen vertikal, um eine sichere Befestigung des auf dem Fahrzeugchassis aufgelegten Container zu gewährleisten.

Eine weitere gegenwärtig besonders bevorzugte Weiterbildung zeichnet sich dadurch aus, daß an beiden Enden der vordersten Quertraverse jeweils ein Steckzapfen und an beiden Enden einer weiteren Quertraverse jeweils ein zusätzlicher Twist-Lock vorgesehen ist und daß die Auflageflächen der vordersten Quertraverse und des Twist-Lock-Tragelementes an der weiteren Quertraverse in einer gemeinsamen Ebene liegen, die vorzugsweise parallel zur Fahrbahnoberfläche verläuft.

Nachfolgend wird ein bevorzugtes Ausführungsbeispiel der erfindungsgemäßen Vorrichtung anhand der beiliegenden Zeichnungen näher erläutert. Es zeigen:
- Figur 1: ein Container-Chassis in Gooseneck-Ausführung in Seitenansicht (Figur 1a) und in Draufsicht (Figur 1b);
- Figur 2: eine vergrößerte Darstellung der vordersten Quertraverse in Draufsicht mit Verriegelungen in einer ersten Ausführung;
- Figur 3: einen Querschnitt durch ein endseitiges Verriegelungsgehäuse der vordersten Quertraverse von Figur 2 entlang der Linie III-III (Figur 3a) und einen Längsschnitt durch dieses Verriegelungsgehäuse (Figur 3b);
- Figur 4: eine Seitenansicht des Endes einer weiteren Quertraverse;
- Figur 5: in zwei unterschiedlichen Seitenansichten (Figuren 5a und b) ein an der Quertraverse von Figur 4 gehaltertes Twist-Lock-Tragelement mit darin installiertem Twist-Lock;
- Figur 6a - d: verschiedene Ansichten eines an den Enden der vordersten Quertraverse anbringbaren Verriegelungsgehäuses mit Verriegelungen in einer zweiten Ausführung; und
- Figur 7: einen Querschnitt (Figur 7a) durch ein auf den Enden der vordersten Quertraverse befestigbares Verriegelungsgehäuse mit Verriegelungen in einer dritten Ausführung und eine Frontalansicht (Figur 7b) dieses Verriegelungsgehäuses.

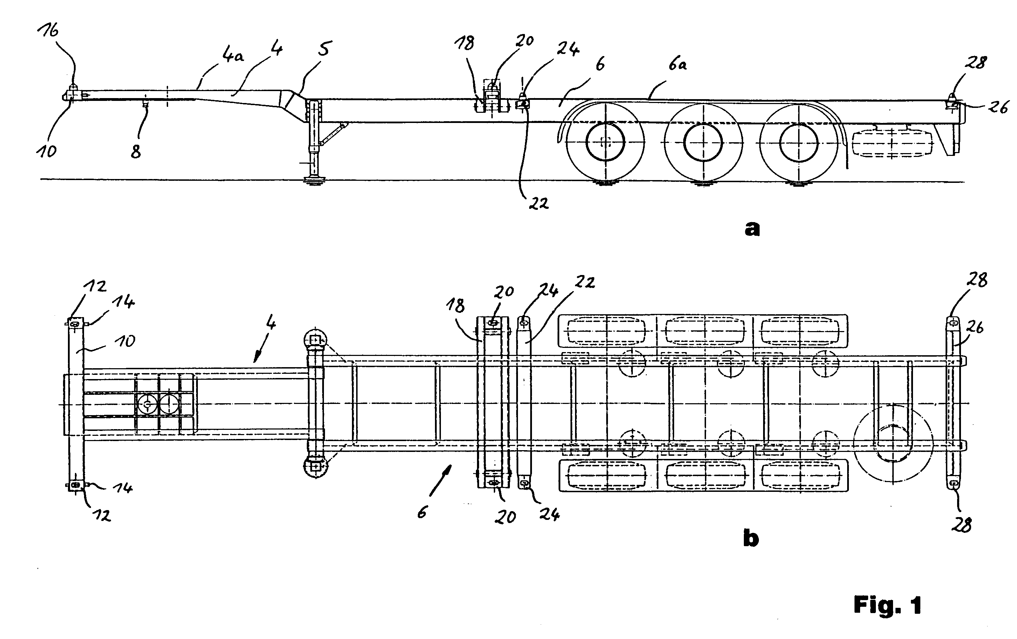

In Figur 1 ist ein Container-Sattelauflieger bzw. Container-Chassis 2 in Gooseneck-Ausführung dargestellt. Das Container-Chassis 2 ist in einen kürzeren vorderen Abschnitt 4 und einen längeren hinteren Abschnitt 6 unterteilt. Wie Figur 1a deutlich erkennen läßt, ist der hintere Abschnitt 6 gegenüber dem vorderen Abschnitt tiefergelegt, so daß zwischen diesen beiden Abschnitten 4 und 6 ein Absatz 5 gebildet wird. Aufgrund des tiefergelegten Abschnittes 6 können mit dem dargestellten Container-Chassis 2 Container mit einer größeren Höhe transportiert werden, wobei die Höhe ja bekanntlich von der maximal zulässigen Durchfahrtshöhe unter Brücken, Unterführungen etc. begrenzt ist. Gegenüber dem hinteren Abschnitt 6 kann der vordere Abschnitt 4 nicht tiefergelegt werden, da die Lage des an der Unterseite des vorderen Abschnittes 4 befestigten Königzapfens 8 fest definiert und unveränderbar ist, und zwar in Anpassung an eine Kupplung eines Sattelschleppers.

Wie insbesondere Figur 1b erkennen läßt, ist am - in Fahrtrichtung betrachtet - vordersten Ende des vorderen Abschnittes 4 eine erste Quertraverse 10 vorgesehen, an deren beiden Enden jeweils ein Verriegelungsgehäuse 12 angebracht ist, welches einen in Fahrtrichtung nach hinten ragenden, axial bewegbaren Steckzapfen 14 und zusätzlich noch einen Twist-Lock 16 trägt. Etwa auf halber Länge weist das Container-Chassis 2 eine zweite Quertraverse 18 mit an den beiden Enden befestigten Twist-Lock-Gehäusen 20 und eine direkt danebenliegende dritte Quertraverse 22 mit an deren Enden angeordneten Twist-Locks 24 auf. Am hintersten Ende des Container-Chassis 2 sitzt dann schließlich noch eine vierte Quertraverse 26 mit an deren beiden Enden angebrachten Twist-Locks 28. Während die Oberseite der vordersten Quertraverse 10 mit der Auflagefläche 4a des vorderen Abschnitts 4 in einer gemeinsamen Ebene liegt, liegen die Oberseiten der Quertraversen 18, 22 und 26 und die Auflageebene 6a des hinteren Abschnittes 6 in einer gemeinsamen tieferen Ebene.

Das in Figur 1 dargestellte Container-Chassis 2 ist für den Transport von Containern der langen Bauart (40 Fuß oder 45 Fuß) vorgesehen, wobei die Unterseite dieser Container im vorderen Bereich mit einem nach innen ragenden und zurückgenommenen Abschnitt, auch Gooseneck-Tunnel genannt, ausgebildet ist, welcher zur Aufnahme des erhöhten vorderen Abschnittes 4 vorgesehen ist, damit ein solcher Container plan auf der Auflageebene 6a des längeren hinteren Abschnittes 6 aufliegen kann. Dabei liegt ein solcher Container nicht auf der Oberseite der ersten Quertraverse 10 auf, sondern nur seitlich an dieser an, wobei die Steckzapfen 14 in ihrer ausgefahrenen Stellung in die vorderen Öffnungen der beiden vorderen unteren Eckbeschläge des Containers greifen und den Container somit vorn arretieren. An der Hinterseite wird der Container von den Twist-Locks 28 der hintersten Quertraverse 26 gehalten.

Das dargestellte Container-Chassis ist jedoch nicht nur für den Transport von Containern der langen Bauart mit Gooseneck-Tunnel geeignet, sondern auch zum Transport von zwei Containern der kurzen Bauart (20 Fuß). Dabei liegt der eine kleine Container auf der hinteren Hälfte des Container-Chassis 2 auf der Auflagefläche 6a des hinteren Abschnittes 6 auf und wird von den Twist-Locks 24 und 28 der dritten und vierten Quertraversen 22 und 26 gehalten. Da die Container der kurzen Bauart nicht mit einem Gooseneck-Tunnel ausgerüstet sind, liegt der vordere Container auf der Auflagefläche 4a des vorderen Abschnittes 4 und gleichzeitig auch noch auf der vordersten Quertraverse 10, deren Oberseite mit der Auflagefläche 4a des vorderen Abschnittes fluchtet, auf und wird an seiner Vorderseite von den Twist-Locks 16 an den beiden Enden der vordersten Quertraverse 10 arretiert. An der hinteren Seite wird der Container von an den beiden Enden der zweiten Quertraverse 18 erhöht angebrachten Twist-Lock-Gehäusen im Abstand zur Auflagefläche 6a des hinteren Abschnittes gehalten und von den zugehörigen Twist-Locks 20 arretiert. Der vordere kurze Container sitzt demnach gegenüber dem hinteren Container um das Maß des Absatzes 5 höher, um daß der hintere Abschnitt 6 gegenüber dem vorderen Abschnitt tiefergelegt ist. Der vordere Container wird in diesem Fall somit an der vordersten Quertraverse 10 nicht von den Steckzapfen 14 gehalten, die zu diesem Zweck in die Quertraverse 10 eingefahren sind.

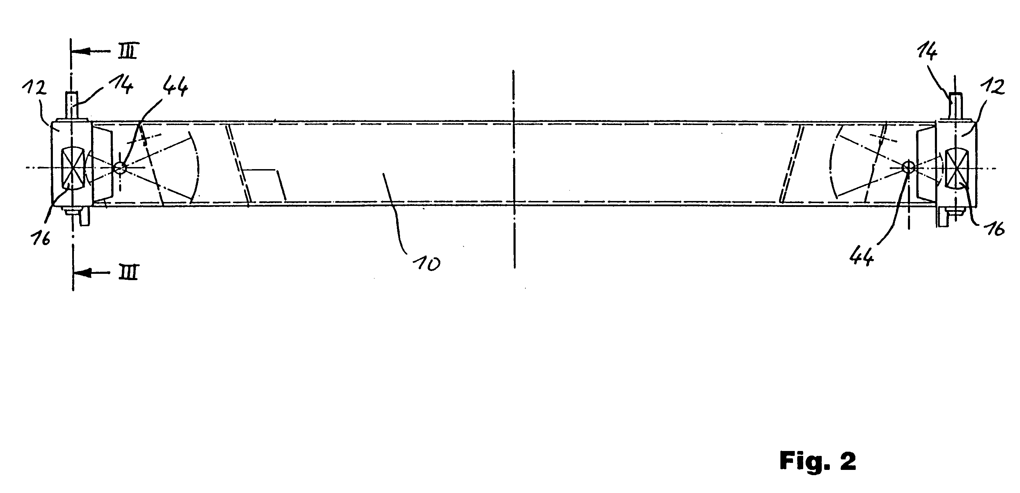

In Figur 2 ist die Quertraverse 10 in vergrößerter Draufsicht dargestellt. Deutlich erkennt man die endseitig angesetzten Verriegelungsgehäuse 12, in denen die Steckzapfen 14 in axialer Richtung bewegbar gelagert sind. In Figur 2 sind die Steckzapfen in ihrer ausgefahrenen Stellung gezeigt. Die Verriegelungsgehäuse dienen nicht nur zur Lagerung der Steckzapfen 14, sondern auch zur Halterung von Twist-Locks 16 in vertikaler Richtung, während die Steckzapfen 14 sich horizontal und in Längsrichtung des Container-Chassis (vgl. hierzu auch Figur 1b), jedoch entgegen der Fahrtrichtung erstrecken. Dabei sind der Steckzapfen und der Twist-Lock 16 im Verriegelungsgehäuse 12 so angeordnet, daß die Mittelachse des Spannbolzen des Twist-Locks 16 die Mittelachse des Steckbolzens 14 rechtwinklig schneidet.

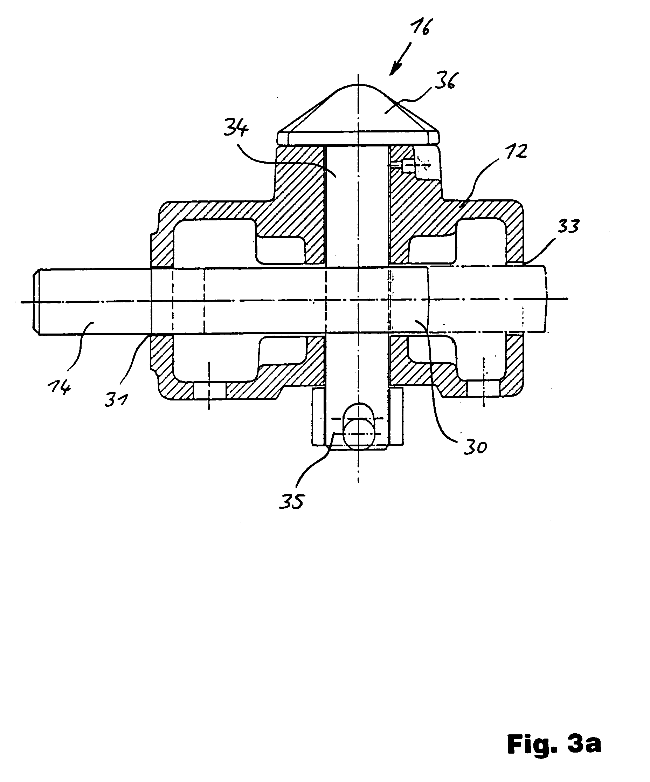

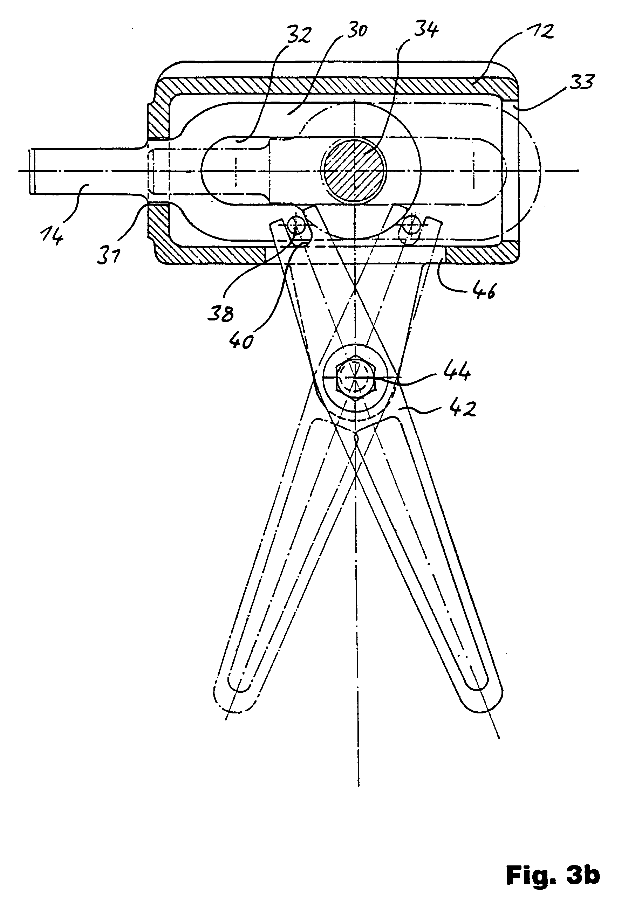

Die Anordnung von Steckzapfen 14 und Twist-Lock 16 im Verriegelungsgehäuse 12 ist im einzelnen den Figuren 3a und b zu entnehmen, von denen Figur 3a einen vertikalen Querschnitt entlang der Linie III-III von Figur 2 und Figur 3b einen horizontalen Längsschnitt zeigt. Wie aus diesen Figuren ersichtlich ist, ist das Verriegelungsgehäuse 12 hohl und nimmt ein Führungsteil 30 auf, an dem der Steckzapfen 14 sitzt, der durch eine Öffnung 31 im Verriegelungsgehäuse 12 nach außen ragt. Das Führungsteil 30 ist so dimensioniert und innerhalb des hohlen Verriegelungsgehäuses gelagert, daß es in axialer Richtung des Steckzapfens 14 zwischen einer ersten Stellung, in der der Steckzapfen 14 aus dem Verriegelungsgehäuse 12 vollständig ausgefahren ist (in Figuren 3a und b in durchgezogenen Linien dargestellt), und einer zweiten Stellung bewegbar ist, in der der Steckzapfen 14 vollständig in das Verriegelungsgehäuse 12 eingefahren ist (in den Figuren 3a und b in strichpunktierten Linien dargestellt), wobei im dargestellten Ausführungsbeispiel das Führungsteil 30 in seiner zweiten Stellung mit dem hinteren Ende aus einer weiteren Öffnung 33 des Verriegelungsgehäuses 12 ein wenig herausragt.

Das Führungsteil 30 ist mit einem geraden Schlitz oder Langloch 32 versehen, durch das sich rechtwinklig zur Bewegungsrichtung des Führungsteils 30 der Spannbolzen 34 des Twist-Locks 16 erstreckt. Der Durchmesser des Spannbolzens 34 ist nur unwesentlich kleiner als die Breite des Langloches 32 gewählt. Der Spannbolzen 34 ist im Verriegelungsgehäuse 12 stationär, jedoch drehbar gelagert. Der Spannbolzen 34 trägt an seinem oberen Ende den Verriegelungskopf 36 des Twist-Locks 16, welcher auf der Oberseite des Verriegelungsgehäuses 12 angeordnet ist. Außerdem ragt der Spannbolzen 34 an der Unterseite des Verriegelungsgehäuses 12 heraus und ist an seinem unteren Ende 35 mit einer in den Figuren nicht dargestellten Spannmutter versehen.

Bei dieser Konstruktion dient der Spannbolzen 34 des Twist-Locks 16 zusammen mit dem diesen aufnehmenden Langloch 32 des Führungsteils 30 als Führungseinrichtung, die eine axiale Bewegbarkeit des Steckzapfens 14 sicherstellt, jedoch eine Bewegung in Querrichtung verhindert. Die Mittelachse des Langloches 32 fällt mit der Mittelachse des Steckzapfens 14 zusammen und wird rechtwinklig von der Mittelachse des Spannbolzens 34 geschnitten. In der dargestellten Ausführung liegen im übrigen die Außenseiten des Führungsteils 30 lose an den zugewandten Innenseiten des Verriegelungsgehäuses 12 an. Wie die Figuren 3a und b ferner erkennen lassen, besitzt das Führungsteil 30 eine im wesentlichen flache O-Form.

Um das Führungsteil 30 und somit den Steckzapfen 14 in axialer Richtung bewegen zu können, sitzt auf der Oberseite des Führungsteils 30 ein kleiner Führungsstift 38, der in einer Aussparung 40 an einem Ende eines Schwenkhebels 42 lose gesteckt ist. Der Schwenkhebel 42 ist an der Quertraverse 10 gehaltert und um eine Drehachse 44 verschwenkbar. Der Schwenkhebel 42 sitzt außerhalb des Verriegelungsgehäuses 12 und ragt durch eine Öffnung 46 in dieses hinein, damit die Aussparung 40 an seinem einen Ende den Stift 38 des im Verriegelungsgehäuse 12 angeordneten Führungsteils 30 umgreifen kann. In Figur 3b ist der Schwenkhebel 42 in durchgezogenen Linien in einer Stellung, in der der Steckzapfen 14 vollständig ausgefahren ist, sowie in strichpunktierten Linien in einer weiteren Stellung dargestellt, in der der Steckzapfen 14 vollständig in das Verriegelungsgehäuse 12 eingefahren ist.

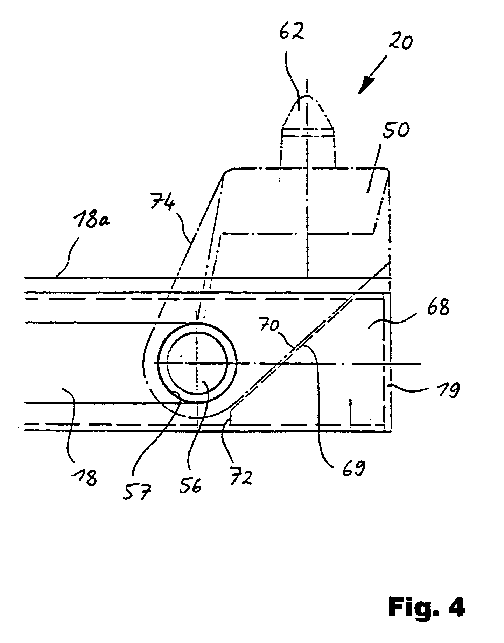

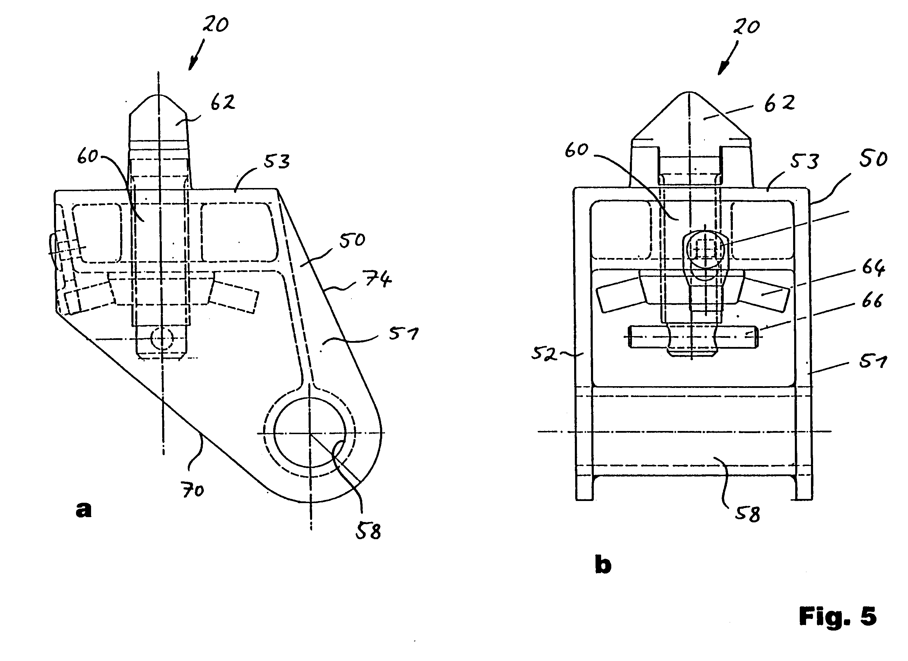

Im folgenden wird die Anordnung der Twist-Locks 20 an den beiden Enden der zweiten Quertraverse 18 anhand der Figuren 4 und 5 näher erläutert.

Der Twist-Lock 20 ist in einem Twist-Lock-Gehäuse 50 gehaltert, welches zwei parallel im Abstand zueinander angeordnete, plattenförmige Seitenschenkel 51, 52 aufweist, die durch ein plattenförmiges Oberteil 53 sowie ein unterhalb dieses angeordnetes Rippenelement 54 miteinander verbunden sind.

Wie Figur 4 erkennen läßt, ist jedes Twist-Lock-Gehäuse 50 mittels eines Drehbolzens 56 schwenkbar an der Quertraverse 18 gehaltert. Die Quertraverse 18 besteht aus zwei im Abstand und parallel zueinander angeordneten Traversenteilen, zwischen denen das Twist-Lock-Gehäuse jedes der beiden Twist-Locks 20 angeordnet und schwenkbar gehaltert ist. Hierzu weist das Twist-Lock-Gehäuse 50 eine Hülse 58 auf, die beide Seitenteile 51, 52, innenseitig miteinander verbindet, wie Figur 5b erkennen läßt. In den beiden Traversenteilen sind entsprechende Bohrungen vorgesehen, durch die die Enden des von der Hülse 58 aufgenommenen Drehbolzen 56 zur schwenkbaren Lagerung des Twist-Lock-Gehäuses 50 ragen. Die Drehachse des Drehbolzens 56 verläuft horizontal und in Fahrtrichtung und quer zur Quertraverse 18, so daß das Twist-Lock-Gehäuse 50 quer zur Fahrtrichtung verschwenkbar ist.

Das Rippenelement 54 weist eine Bohrung zur drehbaren Lagerung des Spannbolzens 60 des Twist-Locks 20 auf. Das obere Ende des Spannbolzens 60 ragt aus dem Oberteil 53 des Twist-Lock-Gehäuses 50 heraus und trägt den Verriegelungskopf 62, während die Spann- und Drehmuttern 64, 66 unterhalb des Rippenelementes 54 innerhalb des Twist-Lock-Gehäuses 50 angeordnet sind.

An den Innenseiten der beiden Traversenteile ist jeweils ein plattenförmiges Element 68 zwischen der Bohrung 57 und dem äußersten Ende 19 befestigt. Dieses plattenförmige Element 19 ist mit einem Rand 69 versehen, der der Öffnung 57 und somit der Mittelachse des Container-Chassis zugewandt ist und derart geneigt verläuft, daß das untere Ende des Randes 69 einen geringeren Abstand zur Mittelachse des Container-Chassis als das obere Ende aufweist (vgl. Figur 4). Die Seitenteile 51, 52 des Twist-Lock-Gehäuses 50 sind mit einem entsprechenden Rand 70 versehen, die so angeordnet ist, daß er in der in Figur 4 gezeigten Arbeitsstellung des Twist-Lock-Gehäuses 50 im wesentlichen flächig auf dem Rand 69 des Elementes 68 aufliegt. Demnach dient das Element 68 als Anschlag und Stützelement zur Halterung des Twist-Lock-Gehäuses 50 in der Arbeitsstellung, in welcher die Drehachse des Spannbolzens 60 des Twist-Locks 20 vertikal gerichtet ist, so daß der Verriegelungskopf 62 nach oben ragt und die Außenfläche des Oberteils 53 des Twist-Lock-Gehäuses 50 eine horizontale Auflagefläche für einen Container der kurzen Bauart bildet. In der Arbeitsstellung liegt das Twist-Lock-Gehäuse 50 mit seinem Rand 70 sicher auf dem Rand 69 des Elementes 68 auf, so daß besondere Arretierungsmittel zur Arretierung des Twist-Lock-Gehäuses 50 nicht unbedingt erforderlich sind.

Außerdem weist das Element 68 einen der Mittelachse des Container-Chassis zugewandte weiteren Rand 72 auf, der sich im wesentlichen vertikal an das untere Ende des geneigten Randes 69 anschließt. Dieser Rand 72 dient als Anschlag für das Twist-Lock-Gehäuse 50, wenn dieses in die Ruhestellung verschwenkt ist. In der Ruhestellung liegt nämlich dann das Twist-Lock-Gehäuse 50 mit dem dem Rand 70 gegenüberliegenden Rand 74 an diesem Rand 72 an, wodurch ein weiteres Verschwenken oder Pendeln des Twist-Lock-Gehäuses 50 in seiner Ruhestellung verhindert wird.

Soll nun das Twist-Lock-Gehäuse 50 von seiner in Figur 4 dargestellten Arbeitsstellung in die Ruhestellung gebracht werden, so muß es lediglich in Richtung des Pfeils 76 zwischen den beiden Traversenteilen der Quertraverse 18 nach unten verschwenkt werden. In der Ruhestellung befindet sich das Twist-Lock-Gehäuse 50 vollständig unterhalb der von der Oberseite 18a der Quertraverse 18 gebildeten Auflageebene. Der Schwenkwinkel beträgt maximal etwa 180°.

Soll auf dem in Figur 1 dargestellte Container-Chassis 2 ein Container der langen Bauart mit Gooseneck-Tunnel transportiert werden, so werden die Twist-Lock-Gehäuse 50 an den Enden der zweiten Quertraverse 18 in die Ruhestellung geschwenkt, da der Container auf der Oberseite 18a der zweiten Quertraverse 18 aufliegen muß und die Twist-Locks 20 in ihre Arbeitsstellung nicht benötigt werden, sondern dann nur stören. Sollen dagegn zwei Container der kurzen Bauart verwendet werden, so werden die Twist-Lock-Gehäuse 50 in ihrer Arbeitsstellung verschwenkt, da die Twist-Locks 20 dann zur Arretierung der Rückseite des vorderen Containers benötigt werden. Die Twist-Lock-Gehäuse 50 sind dabei in ihrer Höhe so dimensioniert, daß in der Arbeitsstellung die Oberfläche der Oberseite 53 mit der Auflagefläche 4a des vorderen Abschnittes 4 des Container-Chassis 2 eine gemeinsame Auflageebene bilden.

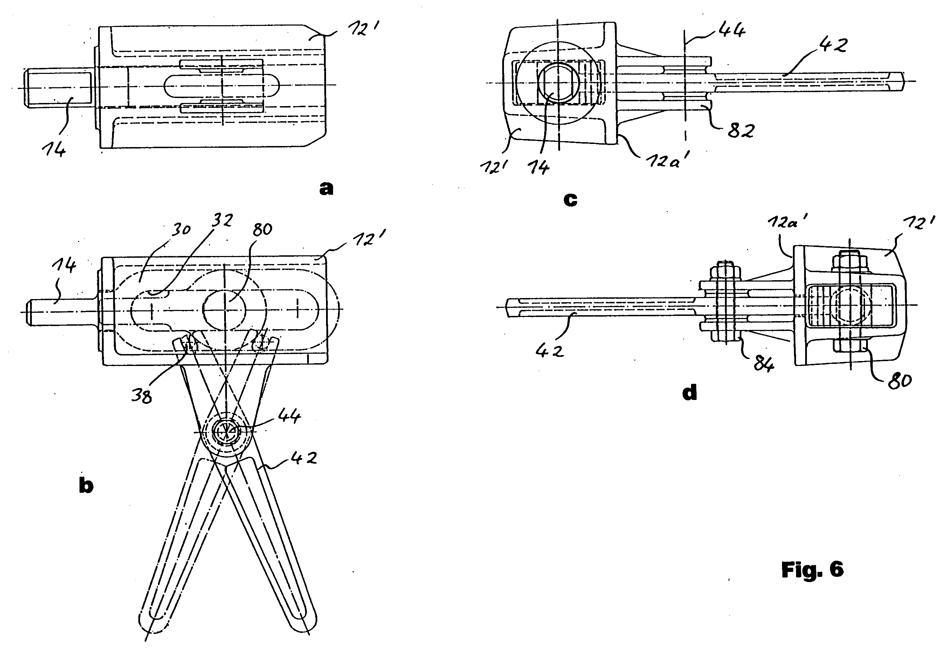

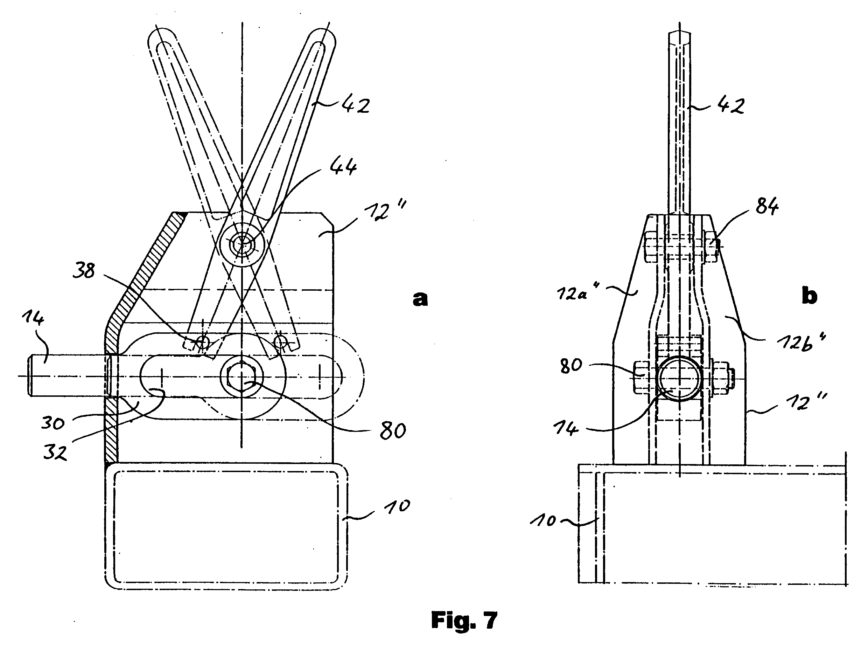

In den Figuren 6 und 7 sind weitere Ausführungen von Verriegelungsgehäusen 12' und 12'' dargestellt, die sich von der in Figur 3 dargestellten Ausführung dadurch unterscheiden, daß ein Twist-Lock nicht vorgesehen ist und anstelle des Twist-Lock-Spannbolzens ein Bolzen 80 im Gehäuse 12' und 12'' befestigt ist, der sich rechtwinklig zur Bewegungsrichtung des Führungsteils 30 und somit zur Achse des Steckbolzens 14 erstreckt. Der Durchmesser des Bolzens 80 ist nur unwesentlich kleiner als die Breite des Langloches 32 gewählt. In den dargestellten Ausführungen weist der Bolzen 80 an seinem einen Ende einen Sechskant-Kopf und an seinem anderen Ende ein Gewindeabschnitt auf, auf den zur Sicherung des Bolzens 80 im Verriegelungsgehäuse 12' bzw. 12'' eine Mutter aufgeschraubt ist. Der Bolzen 80 ist im Verriegelungsgehäuse 12' bzw. 12'' stationär und fest gelagert.

Außerdem unterscheiden sich die in den Figuren 6 und 7 gezeigten Ausführungen von der Ausführung von Figur 3 dadurch, daß der Schwenkhebel 42 direkt am Verriegelungsgehäuse 12' bzw. 12'' um seine Drehachse 44 verschwenkbar gelagert ist.

Hierzu ist bei der Ausführung von Figur 6 ein an der Stirnseite 12a' des Verriegelungsgehäuses 12' sitzendes Gabellager 82 vorgesehen, an der der Schwenkhebel 42 mit Hilfe eines Gelenkbolzens 84 schwenkbar gehaltert ist.

Dagegen ist der Schwenkhebel 42 bei der Ausführung von Figur 7 direkt im Gehäuse mit Hilfe des Gelenkbolzens 84 zwischen zwei Seitenwänden 12a'' und 12b'' gelagert und ragt aus diesem heraus.

Die in den Figuren 6 und 7 dargestellten Ausführungen bilden vom Querträger 10 separate Einheiten, die unabhängig vom Querträger 10 hergestellt und dann nur noch, vorzugsweise durch Schweißen, an den Enden des Querträgers 10 befestigt werden müssen. Dadurch erübrigen sich Anpassungsarbeiten am Querträger, welche manchmal Probleme bezüglich der Festigkeit und Statik des Querträgers mit sich bringen können.

Das in Figur 6 dargestellte Verriegelungsgehäuse 12' wird mit seiner Stirnseite 12a' am offenen Ende des Querträgers 10 so befestigt, daß der Schwenkhebel 42 in den Hohlraum des Querträgers 10 hineinragt. Durch im Querträger 10 ausgebildete Öffnungen kann dann der Schwenkhebel 42 bedient werden.

Demgegenüber ist die in Figur 7 gezeigte Ausführung dazu vorgesehen, auf den Querträger 10 so aufgesetzt zu werden, daß der Schwenkhebel 42 nach oben ragt und von außen frei zugänglich ist. Diese Ausführung ist insbesondere für in Frankreich gängige Containerchassis mit zusätzlichen höher sitzenden Beschlägen geeignet.

Im übrigen weisen die in den Figuren 6 und 7 gezeigten Ausführungen die gleichen Konstruktionsmerkmale wie die Ausführung von Figur 3 auf. Insbesondere lieget das Führungsteil 30 mit seinen Außenseiten lose an den zugewandten Innenseiten des Verriegelungsgehäuses 12' bzw. 12'' an und wird somit auch von den Innenseiten des Verriegelungsgehäuses geführt. Auch weist der Schwenkhebel 42 an seinem einen Ende die Aussparung auf, mit der er den am Führungsteil 30 sitzenden Stift 38 umgreifen kann.

## Patentansprüche

1. Vorrichtung zur Verriegelung eines Containers an einem Fahrzeugchassis, mit mindestens einem an einem Teil (10) des Fahrzeugchassis (2) gelagerten und in axialer Richtung zwischen einer eingefahrenen und einer ausgefahrenen Stellung bewegbaren Steckzapfen (14), der in seiner ausgefahrenen Stellung in einen Verriegelungsbeschlag eines am Fahrzeugchassisteil (10) in Anlage gebrachten Containers eingreift,
dadurch gekennzeichnet, daß der Steckzapfen (14) an einem ersten Führungselement (30) sitzt, das eine längliche und sich in axialer Richtung des Steckzapfens (14) erstreckende Ausnehmung (32) aufweist, in oder durch die ein am Fahrzeugchassisteil (10) vorgesehenes und gegenüber der Bewegung des Steckzapfens (14) feststehendes zweites Führungselement (34; 80) ragt.

2. Vorrichtung nach Anspruch 1,
dadurch gekennzeichnet, daß der Steckzapfen (14) und das zweite Führungselement (34; 80) in einem separaten am Fahrzeugchassisteil (10) befestigbaren Gehäuse (12; 12'; 12'') gelagert sind.

3. Vorrichtung nach Anspruch 2,
dadurch gekennzeichnet, daß das zweite Führungselement von einem an mindestens einer Gehäusewand befestigten Bolzen (80) gebildet ist.

4. Vorrichtung nach Anspruch 1 oder 2,
dadurch gekennzeichnet, daß das zweite Führungselement vom Spannbolzen (34) eines Twist-Locks (16) gebildet ist, der in Eingriff mit einem Verriegelungsbeschlag eines auf dem Fahrzeugchassisteil (10) aufliegenden Containers bringbar ist.

5. Vorrichtung nach einem der Ansprüche 1 bis 4,
dadurch gekennzeichnet, daß sich das zweite Führungselement (34) rechtwinklig zum Steckzapfen (14) erstreckt.

6. Vorrichtung nach Anspruch 5,
dadurch gekennzeichnet, daß die Mittelachse des zweiten Führungselementes (34) die Mittelachse des Steckzapfens (14) schneidet.

7. Vorrichtung nach den Ansprüchen 4 bis 6,
dadurch gekennzeichnet, daß der Steckzapfen (14) horizontal angeordnet ist und in seiner ausgefahrenen Stellung in einen Verriegelungsbeschlag eines seitlich am Fahrzeugchassisteil (10) anliegenden Containers eingreift und daß sich der Spannbolzen (34) des Twist-Locks (16) in vertikaler Richtung erstreckt und dessen Verriegelungskopf (36) am oberen Ende des Spannbolzens (34) angeordnet ist, wodurch der Twist-Lock (16) in Eingriff mit einem Verriegelungsbeschlag eines auf der Oberseite des Fahrzeugchassisteils (10, 12) aufliegenden Containers bringbar ist.

8. Vorrichtung nach einem der Ansprüche 1 bis 7,
dadurch gekennzeichnet, daß die Ausnehmung im ersten Führungselement (30) aus einem Langloch (32) oder Schlitz besteht.

9. Vorrichtung nach einem der Ansprüche 1 bis 7,
dadurch gekennzeichnet, daß das erste Führungselement die Form einer Gabel mit zwei im Abstand voneinander angeordneten Schenkeln besitzt, zwischen denen die Ausnehmung gebildet ist.

10. Vorrichtung nach einem der Ansprüche 1 bis 9,
dadurch gekennzeichnet, daß der Steckzapfen (14) mittels eines Schwenkhebels (42) bewegbar ist.

11. Vorrichtung nach Anspruch 10 und Anspruch 2,
dadurch gekennzeichnet, daß der Schwenkhebel (42) am Gehäuse (12'; 12'') gelagert ist.

12. Vorrichtung nach Anspruch 10 oder 11,
dadurch gekennzeichnet, daß am ersten Führungselement (30) ein Stift (38) angebracht ist, der lose in eine an einem Ende des Schwenkhebels (42) vorgesehene Aussparung (40) ragt.

13. Vorrichtung nach einem der Ansprüche 1 bis 12,
dadurch gekennzeichnet, daß sich der Steckzapfen (14) in Längsrichtung des Fahrzeugchassis (2) erstreckt.

14. Vorrichtung nach Anspruch 13,
dadurch gekennzeichnet, daß das Fahrzeugchassis ein Container-Chassis (2) in Gooseneck-Ausführung ist und an dessen vorderster Quertraverse (10) mindestens ein sich entgegen der Fahrtrichtung erstreckender Steckzapfen (14) gelagert ist.

15. Vorrichtung nach Anspruch 14, die mindestens einen zusätzlichen Twist-Lock (20) aufweist, der an einer zusätzlichen Quertraverse (18) angebracht ist, die in einem der Länge eines Containers entsprechenden Abstand zur vordersten Quertraverse (10) angeordnet ist,
dadurch gekennzeichnet, daß der zusätzliche Twist-Lock (20) an einem Tragelement (50) installiert ist, das zwischen einer Arbeitsstellung, in der der Twist-Lock (20) mit einem Verriegelungsbeschlag eines auf dem Fahrzeugchassis (2) aufliegenden Containers in Eingriff bringbar ist, und einer Ruhestellung, in der sich der Twist-Lock (20) außer Eingriff mit dem Verriegelungsbeschlag des Containers und in einem Abstand zum Container befindet, bewegbar am Fahrzeugchassis (2) gehaltert ist.

16. Vorrichtung nach Anspruch 15,
dadurch gekennzeichnet, daß sich das Twist-Lock-Tragelement (50) in der Ruhestellung vollständig unter der auf dem Fahrzeugchassis (2) gebildeten Auflageebene (6a, 18a) des Containers befindet.

17. Vorrichtung nach Anspruch 15 oder 16,
dadurch gekennzeichnet, daß das Twist-Lock-Tragelement (50) zwischen der Arbeits- und der Ruhestellung schwenkbar am Fahrzeugchassis (2) gehaltert ist.

18. Vorrichtung nach Anspruch 17,
dadurch gekennzeichnet, daß die Schwenkachse in Richtung der Längserstreckung des Fahrzeugchassis (2) verläuft und somit das Twist-Lock-Tragelement (50) quer zur Längserstreckung des Fahrzeugchassis (2) verschwenkbar ist.

19. Vorrichtung nach Anspruch 18,
dadurch gekennzeichnet, daß das Twist-Lock-Tragelement (50) zur Mitte des Fahrzeugchassis (2) hin verschwenkbar ist.

20. Vorrichtung nach einem der Ansprüche 17 bis 19,
dadurch gekennzeichnet, daß die Drehachse des Spannbolzens (60) des Twist-Locks (20) in einem Abstand zur Schwenkachse (56) des Twist-Lock-Tragelementes (50) verläuft.

21. Vorrichtung nach einem der Ansprüche 17 bis 20,
dadurch gekennzeichnet, daß der Verriegelungskopf (62) des Twist-Locks (20) in einem Abstand zur Schwenkachse (56) des Twist-Lock-Tragelementes (50) angeordnet und von der Schwenkachse (56) im wesentlichen weggerichtet ist.

22. Vorrichtung nach einem der Ansprüche 15 bis 21,
gekennzeichnet durch einen am Fahrzeugchassis (2) befestigten ersten Anschlag (68), auf dem das Twist-Lock-Tragelement (50) in der Arbeitsstellung aufliegt.

23. Vorrichtung nach den Ansprüchen 22 und 20,
dadurch gekennzeichnet, daß der Anschlag (68) eine rechtwinklig zur Schwenkebene und winklig zur Schwenkrichtung des Twist-Lock-Tragelementes (50) angeordnete Auflagefläche (69) aufweist, auf der das Twist-Lock-Tragelement (50) mit einer entsprechend ausgebildeten Fläche (70) in der Arbeitsstellung aufliegt.

24. Vorrichtung nach einem der Ansprüche 15 bis 23,
gekennzeichnet durch einen am Fahrzeugchassis (2, 18) befestigten zweiten Anschlag (72) an den das Twist-Lock-Tragelement (50) in der Ruhestellung anstößt.

25. Vorrichtung nach den Ansprüchen 24 und 17,
dadurch gekennzeichnet, daß der Schwenkwinkel auf maximal 180° begrenzt ist.

26. Vorrichtung nach einem der Ansprüche 15 bis 25,
dadurch gekennzeichnet, daß in der Arbeitsstellung der Spannbolzen (60) des Twist-Locks (20) im wesentlichen vertikal steht.

27. Vorrichtung nach einem der Ansprüche 14 bis 26,
dadurch gekennzeichnet, daß an beiden Enden der vordersten Quertraverse (10) jeweils ein Steckzapfen (14) und an beiden Enden einer weiteren Quertraverse (18) jeweils ein zusätzlicher Twist-Lock (20) vorgesehen ist und daß die Auflageflächen der vordersten Quertraverse (10) und der Twist-Lock-Tragelemente (50) an der weiteren Quertraverse (18) in deren Arbeitsstellung in einer gemeinsamen Ebene liegen, die vorzugsweise parallel zur Fahrbahnoberfläche verläuft.

## Claims

1. An apparatus for locking a container on a vehicle chassis, having at least one insertion journal (14) which is mounted on one part (10) of the vehicle chassis (2) and is movable in the axial direction between a retracted and an extended position and which, in its extended position, engages in a locking brace of a container which is brought to bear against the vehicle chassis part (10), characterized in that the insertion journal (14) is located on a first guide element (30) which has an elongate recess (32) which extends in the axial direction of the insertion journal (14) and into or through which there projects a second guide element (34;80) which is provided on the vehicle chassis part (10) and is stationary with respect to the movement of the insertion journal (14).

2. An apparatus according to Claim 1, characterized in that the insertion journal (14) and the second guide element (34;80) are mounted in a separate housing (12;12';12'') which can be secured to the vehicle chassis part (10).

3. An apparatus according to Claim 2, characterized in that the second guide element is formed by a bolt (80) which is secured to at least one housing wall.

4. An apparatus according to Claim 1 or 2, characterized in that the second guide element is formed by the tensioning bolt (34) of a twistlock (16) which can be brought into engagement with a locking brace of a container which is supported on the vehicle chassis part (10).

5. An apparatus according to one of Claims 1 to 4, characterized in that the second guide element (34) extends at a right angle to the insertion journal (14).

6. An apparatus according to Claim 5, characterized in that the centre axis of the second guide element (34) cuts the centre axis of the insertion journal (14).

7. An apparatus according to Claims 4 to 6, characterized in that the insertion journal (14) is arranged horizontally and, in its extended position, engages in a locking brace of a container which bears laterally against the vehicle chassis part (10), and in that the tensioning bolt (34) of the twistlock (16) extends in the vertical direction and its locking head (36) is arranged on the upper end of the tensioning bolt (34), as a result of which the twistlock (16) can be brought into engagement with a locking brace of a container which is supported on the upper side of the vehicle chassis part (10,12).

8. An apparatus according to one of Claims 1 to 7, characterized in that the recess in the first guide element (30) comprises an elongate hole (32) or slot.

9. An apparatus according to one of Claims 1 to 7, characterized in that the first guide element has the form of a fork with two limbs which are arranged at a spacing from one another and between which the recess is formed.

10. An apparatus according to one of Claims 1 to 9, characterized in that the insertion journal (14) can be moved by means of a pivot lever (42).

11. An apparatus according to Claim 10 and Claim 2, characterized in that the pivot lever (42) is mounted on the housing (12';12'').

12. An apparatus according to Claim 10 or 11, characterized in that there is mounted on the first guide element (30) a pin (38) which loosely projects into a cutout (40) which is provided at one end of the pivot lever (42).

13. An apparatus according to one of Claims 1 to 12, characterized in that the insertion journal (14) extends in the longitudinal direction of the vehicle chassis (2).

14. An apparatus according to Claim 13, characterized in that the vehicle chassis is a container chassis (2) in gooseneck form and on the frontmost cross piece (10) thereof there is mounted at least one insertion journal (14) extending in the opposite direction to the direction of travel.

15. An apparatus according to Claim 14, having at least one additional twistlock (20) which is mounted on an additional cross piece (18) which is arranged at a spacing to the frontmost cross piece (10), this spacing corresponding to the length of a container, characterized in that the additional twistlock (20) is installed on a carrying element (50) which is held on the vehicle chassis (2) movably between a working position in which the twistlock (20) can be brought into engagement with a locking brace of a container, which is supported on the vehicle chassis (2), and an inoperative position in which the twistlock (20) is out of engagement with the locking brace of the container and at a spacing to the container.

16. An apparatus according to Claim 15, characterized in that in the inoperative position the twistlock carrying element (50) is completely below the supporting plane (6a, 18a) of the container, which is formed on the vehicle chassis (2).

17. An apparatus according to Claim 15 or 16, characterized in that the twistlock carrying element (50) is held on the vehicle chassis (2) pivotally between the working position and the inoperative position.

18. An apparatus according to Claim 17, characterized in that the pivot axis runs in the direction of the longitudinal extent of the vehicle chassis (2) and consequently the twistlock carrying element (50) can be pivoted transversely with respect to the longitudinal extent of the vehicle chassis (2).

19. An apparatus according to Claim 18, characterized in that the twistlock carrying element (50) can be pivoted towards the centre of the vehicle chassis (2).

20. An apparatus according to one of Claims 17 to 19, characterized in that the rotational axis of the tensioning bolt (60) of the twistlock (20) runs at a spacing to the pivot axis (56) of the twistlock carrying element (50).

21. An apparatus according to one of Claims 17 to 20, characterized in that the locking head (62) of the twistlock (20) is arranged at a spacing to the pivot axis (56) of the twistlock carrying element (50) and is substantially directed away from the pivot axis (56).

22. An apparatus according to one of Claims 15 to 21, characterized by a first stop (68) which is secured to the vehicle chassis (2) and on which the twistlock carrying element (50) is supported in the working position.

23. An apparatus according to Claims 22 and 20, characterized in that the stop (68) has a supporting surface (69) which is arranged at a right angle to the pivoting plane and at an angle to the pivotal direction of the twistlock carrying element (50) and on which the twistlock carrying element (50) is supported in the working position by means of a correspondingly constructed surface (70).

24. An apparatus according to one of Claims 15 to 23, characterized by a second stop (72) which is secured to the vehicle chassis (2,18) and against which the twistlock carrying element (50) abuts in the inoperative position.

25. An apparatus according to Claims 24 and 17, characterized in that the pivoting angle is limited to a maximum of 180°.

26. An apparatus according to one of Claims 15 to 25, characterized in that, in the working position, the tensioning bolt (60) of the twistlock (20) stands substantially vertically.

27. An apparatus according to one of Claims 14 to 26, characterized in that at both ends of the frontmost cross piece (10) there is provided a respective insertion journal (14) and at both ends of a further cross piece (18) there is provided a respective additional twistlock (20), and in that the supporting surfaces of the frontmost cross piece (10) and of the twistlock carrying elements (50) on the further cross piece (18) lie, in the working position of the latter, in a common plane which preferably runs parallel to the road surface.

## Revendications

1. Dispositif de verrouillage d'un conteneur sur le châssis d'un véhicule, comprenant au moins un tenon d'emboîtement (14) monté sur une partie (10) du châssis (2) du véhicule et mobile dans la direction axiale entre une position rentrée et une position sortie, qui s'engage dans sa position sortie dans une armature de verrouillage d'un contenue mis en appui contre la partie (10) du châssis du véhicule, caractérisé en ce que le tenon d'emboîtement (14) siège sur un premier élément de guidage (30) qui présente un évidement allongé (32) s'étendant dans la direction axiale du tenon d'emboîtement (14), évidement dans lequel ou à travers lequel dépasse un deuxième élément de guidage (34; 80) prévu sur la partie (10) du châssis du véhicule et immobile par rapport au mouvement du tenon d'emboîtement (14).

2. Dispositif selon la revendication 1, caractérisé en ce que le tenon d'emboîtement (14) et le deuxième élément de guidage (34; 80) sont montés dans un boîtier séparé (12; 12'; 12'') se fixant sur la partie (10) du châssis du véhicule.

3. Dispositif selon la revendication 2, caractérisé en ce que le deuxième élément de guidage est formé par un goujon (80) fixé à au moins une paroi du boîtier.

4. Dispositif selon la revendication 1 ou 2, caractérisé en ce que le deuxième élément de guidage est formé par la goupille de serrage (34) d'un verrou tournant (16), qui peut être mis en prise avec une armature de verrouillage d'un conteneur reposant sur la partie (10) du châssis du véhicule.

5. Dispositif selon l'une des revendications 1 à 4, caractérisé en ce que le deuxième élément de guidage (34) s'étend perpendiculairement au tenon d'emboîtement (14).

6. Dispositif selon la revendication 5, caractérisé en ce que l'axe médian du deuxième élément de guidage (34) coupe l'axe médian du tenon d'emboîtement (14).

7. Dispositif selon l'une des revendications 4 à 6, caractérisé en ce que le tenon d'emboîtement (14) est placé horizontalement et s'engage dans sa position sortie dans une armature de verrouillage d'un conteneur appuyé latéralement contre la partie (10) du châssis du véhicule, et en ce que la goupille de serrage (34) du verrou tournant (16) s'étend verticalement et sa tête de verrouillage (36) est placée à l'extrémité supérieure de la goupille de serrage (34), de sorte que le verrou tournant (16) peut être mise en prise avec une armature de verrouillage d'un conteneur reposant sur la face supérieure de la partie (10, 12) du châssis du véhicule.

8. Dispositif selon l'une des revendications 1 à 7, caractérisé en ce que l'évidement dans le premier élément de guidage (30) est constitué d'un trou allongé (32) ou d'une fente.

9. Dispositif selon l'une des revendications 1 à 7, caractérisé en ce que le premier élément de guidage a la forme d'une fourche avec deux flancs espacés l'un de l'autre, entre lesquels est formé l'évidement.

10. Dispositif selon l'une des revendications 1 à 9, caractérisé en ce que le tenon d'emboîtement (14) est mobile au moyen d'un levier pivotant (42).

11. Dispositif selon la revendication 10 et la revendication 2, caractérisé en ce que le levier pivotant (42) est monté sur le boîtier (12'; 12'').

12. Dispositif selon la revendication 10 ou 11, caractérisé en ce qu'un ergot (38) est placé sur le premier élément de guidage (30), ergot qui dépasse librement dans un évidement (40) prévu à une extrémité du levier pivotant (42).

13. Dispositif selon l'une des revendications 1 à 12, caractérisé en ce que le tenon d'emboîtement (14) s'étend dans la direction longitudinale du châssis (2) du véhicule.

14. Dispositif selon la revendication 13, caractérisé en ce que le châssis du véhicule est un châssis de conteneur (2) réalisé en col de cygne, et au moins un tenon d'emboîtement (14), s'étendant dans la direction opposée à la direction longitudinale, est monté sur sa traverse transversale (10) la plus en avant.

15. Dispositif selon la revendication 14, qui présente au moins un verrou tournant (20) supplémentaire, qui est placé sur une traverse transversale (18) supplémentaire, qui est placée à une distance correspondant à la longueur du conteneur de la traverse transversale (10) la plus en avant, caractérisé en ce que le verrou tournant supplémentaire (20) est installé sur un élément porteur (50) est monté mobile sur le châssis (2) du véhicule entre une position de travail, dans laquelle le verrou tournant (20) peut être mise en prise avec une armature de verrouillage d'un conteneur reposant sur le châssis (2) du véhicule, et une position de repos, dans laquelle le verrou tournant (20) se trouve hors de prise avec l'armature de verrouillage du conteneur et se trouve à distance du conteneur.

16. Dispositif selon la revendication 15, caractérisé en ce que l'élément porteur (50) du verrou tournant, dans la position de repos, se trouve entièrement sous le plan d'appui (6a, 18a) du conteneur qui est formé sur le châssis (2) du véhicule.

17. Dispositif selon la revendication 15 ou 16, caractérisé en ce que l'élément porteur (50) du verrou tournant est monté de manière sur le châssis (2) du véhicule entre les positions de travail et de repos.

18. Dispositif selon la revendication 17, caractérisé en ce que l'axe de pivotement s'étend dans la direction longitudinale du châssis (2) du véhicule et ainsi l'élément porteur (50) du verrou tournant peut pivoter transversalement à la direction longitudinale du châssis (2) du véhicule.

19. Dispositif selon la revendication 18, caractérisé en ce que l'élément porteur (50) du verrou tournant peut pivoter en direction du milieu du châssis (2) du véhicule.

20. Dispositif selon l'une des revendications 17 à 19, caractérisé en ce que l'axe de rotation de la goupille de serrage (60) du verrou tournant (20) se trouve à distance de l'axe de pivotement (56) de l'élément porteur (50) du verrou tournant.

21. Dispositif selon l'une des revendications 17 à 20, caractérisé en ce que la tête de verrouillage (62) du verrou tournant (20) est placée à distance de l'axe de pivotement (56) de l'élément porteur (50) du verrou tournant et tourne pour l'essentiel le dos à l'axe de pivotement (56).

22. Dispositif selon l'une des revendications 15 à 21, caractérisé par une première butée (68) fixée sur le châssis (2) du véhicule, sur laquelle repose l'élément porteur (50) du verrou tournant dans la position de travail.

23. Dispositif selon les revendications 22 et 20, caractérisé en ce que la butée (68) présente une surface d'appui (69) perpendiculaire au plan de pivotement et en angle par rapport à la direction de pivotement de l'élément porteur (50) du verrou tournant, surface sur laquelle, dans la position de travail, repose l'élément porteur (50) du verrou tournant avec une surface (70) de conformation correspondante.

24. Dispositif selon l'une des revendications 15 à 23, caractérisé par une deuxième butée (72) fixée sur le châssis (2, 18) du véhicule, sur laquelle bute l'élément porteur (50) du verrou tournant dans la position de repos.

25. Dispositif selon les revendications 24 et 17, caractérisé en ce que l'angle de pivotement est limité à au plus 180°.

26. Dispositif selon l'une des revendications 15 à 25, caractérisé en ce que, dans la position de travail, la goupille de serrage (60) du verrou tournant (20) se trouve pour l'essentiel verticale.

27. Dispositif selon l'une des revendications 14 à 26, caractérisé en ce qu'au deux extrémités de la traverse transversale (10) la plus en avant, il est prévu à chaque fois un tenon d'emboîtement (14) et, au deux extrémités d'une autre traverse transversale (18), il est prévu à chaque fois un verrou tournant (20) supplémentaire, et les éléments porteurs (50) des verrous tournants sur l'autre traverse transversale (18) se trouvent dans leur position de travail dans un plan commun, qui s'étend de préférence parallèlement à la surface de la chaussée.
